## Europäisches Patentamt

## European Patent Office

(19)

## Office européen des brevets

(11) Numéro de publication: **0 202 484**
**B1**

(12)

# FASCICULE DE BREVET EUROPÉEN

(45) Date de publication du fascicule du brevet:
02.08.89

(51) Int. Cl.⁴: **A 23 J 3/00,** A 23 G 1/00,
A 23 L 1/305

(21) Numéro de dépôt: **86105505.1**

(22) Date de dépôt: **21.04.86**

(54) **Procédé de préparation d'un produit sec expansé à base de caséine et utilisations de ce produit.**

(30) Priorité: **21.05.85 FR 8507605**

(43) Date de publication de la demande:
**26.11.86 Bulletin 86/48**

(45) Mention de la délivrance du brevet:
**02.08.89 Bulletin 89/31**

(84) Etats contractants désignés:
**CH DE GB LI NL**

(56) Documents cité:
**EP-A-0 026 119**
**FR-A-364 635**
**GB-A-2 004 174**
**GB-A-2 148 902**

(73) Titulaire: **SOCIETE DES PRODUITS NESTLE S.A.,**
**Case postale 353, CH- 1800 Vevey (CH)**

(72) Inventeur: **Bisson, Jean- Pierre, Village Plantro La**
**Barre de Semilly, F-50810 Saint- Jean des**
**Baisants (FR)**
Inventeur: **Bussière, Michel, 3, Allée des Fresnes,**
**F-60000 Beauvais (FR)**
Inventeur: **Fournet, Gaston, Ch. des Tréflons 8,**
**F-74200 Thonon- les- Bains (FR)**
Inventeur: **Jacquenod, Pierre, 11, Imp. Denelle,**
**F-603090 Berneuil- en- Bray (FR)**

## Description

L'invention concerne un procédé de préparation d'un produit sec expansé à base de caséine et ses utilisations, notamment comme snack et comme ingrédient entrant dans la préparation des produits culinaires et de confiserie-chocolaterie.

Il est connu de transformer la caséine sous forme de caséinate en produits secs expansés du genre des snacks.

Selon la demande de brevet britannique publiée No. 2 004 174 par exemple, on extrude sous une pression de 30 à 50 bar et à une température de 80 à 160°C vers une enceinte à la pression atmosphérique et à température ambiante une masse pâteuse composée de caséine acide, d'un carbonate alcalin et d'eau de manière à préparer un caséinate. La libération de l'eau sous forme de vapeur et du gaz carbonique provenant de la réaction au sein de la masse dans les conditions de l'extrusion permettent un gonflement du produit.

Dans la demande de brevet britannique publiées No. 2 044 774, on propose d'améliorer le caractère croustillant des produits obtenus par la méthode précédente en ajoutant à la masse soumise à l'extrusion un agent modificateur tel qu'un aldéhyde.

Selon la demande de brevet européen No. 0 026 119, on extrude dans un extrudeur bi-vis un mélange poudreux de caséine et de lactosérum, le cas échéant additionné de matière grasse lactique anhydre, dans des conditions de pression et de température favorisant la formation de co-précipités entre les protéines sériques et la caséine, puis on refroidit et on broie finement l'extrudat. La poudre obtenue convient à la fabrication du chocolat au lait et des pâtes à glacer cacaotées en remplacement des poudres de lait gras séchées sur cylindres.

Ces méthodes ont recours à des agents chimiques dont l'emploi est de plus en plus contesté par les législations alimentaires et qui altèrent le goût neutre de la caséine.

Nous avons trouvé qu'on pouvait, contre toute attente, structurer la caséine sans employer d'agents chimiques par extrusion-expansion et préparer des produits secs expansés, croustillants et de goût neutre aptes à être utilisés dans toutes sortes d'applications dans le domaine alimentaire.

Le procédé selon l'invention est caractérisé par le fait qu'on prépare une caséine de caractère présure de pH 5,1 à 5,7, qu'on la sèche à une température du produit ne dépassant pas environ 70°C jusqu'à un taux de matières sèches de 81 à 85 % en poids, qu'on l'extrude dans une boudineuse à une température de 30 à 100°C sous une pression suffisante pour la rendre plastique, le temps de séjour du produit dans la boudineuse étant 5 à 90 s, qu'on provoque son expansion en la soumettant à une pression sub-atmosphérique et qu'on divise le boudin obtenu.

La caséine de départ est de caractère présure. Cela veut dire qu'elle est mixte et à prédominance présure. Elle est préparée par coagulation du lait, de préférence écrémé, par la présure et son pH est réglé à 5,1 - 5,7 préalablement à la coagulation, avantageusement à 5,2 - 5,4, de préférence par acidification biologique au moyen de ferments, par exemple de ferments mésophiles. Elle se distingue des caséines acides obtenues par précipitation du lait à l'aide d'un acide fort au pH isoélectrique, soit 4,6. Elle diffère également des caséinates qui proviennent de la resolubilisation des caséines acides par une base forte à un pH de 6,6 - 7. Elle est distincte des caséines présure proprement dites préparées par emprésurage du lait à un pH de 6,6 - 6,7. Enfin, elle n'aura pas subi de modification par traitement chimique ou enzymatique.

La gamme de pH choisie est nécessaire à la mise en oeuvre du procédé car dans ces conditions la caséine a la thermoplasticité requise pour permettre son extrusion aux températures inférieures à 100°C sans subir de dénaturation. Elle contient de préférence aussi peu de lactose et de matières grasses résiduels que possible, par exemple au maximum 1 % en poids de lactose et 1 % en poids de matières grasses, de manière à éviter le brunissement par réaction de Maillard et l'exudation de matière grasse lors du séchage ultérieur.

On peut préparer la caséine par les opérations fromagères usuelles d'emprésurage et d'ensemencement du lait, de tranchage du caillé, de soutirage du petit-lait, de lavage le cas échéant avec brassage et de pressage des grains de caillé, de préférence jusqu'à un taux de matières sèches de 44 à 48 % en poids sous forme de blocs, par exemple dans des moules. On peut ensuite découper les blocs en morceaux puis diviser les morceaux, par exemple à l'aide d'un broyeur, d'un cutter ou d'un moulin, de préférence en grains de 1 mm à 2 cm.

En variante, on peut après pressage du caillé saler les blocs, par exemple en saumure saturée, puis procéder à leur ressuyage avant de les diviser en grains.

L'opération suivante est le séchage des grains de caillé dans des conditions ménagées et non-dénaturantes, c'est-à-dire à une température du produit ne dépassant pas environ 70°C. On peut les sécher par différents moyens, par exemple en étuve sous vide, à l'aide d'un four à micro-ondes sous vide, dans un sécheur à air chaud ou de préférence à l'aide d'un sécheur à cylindres, par exemple à un ou deux cylindres. Lorsqu'on utilise un sécheur à cylindres, les grains de caillé se ramollissent au contact de la paroi chauffée des cylindres et forment un bourbier de matière thermoplastique qui encolle les cylindres, ce qui génère un film de produit séché que l'on peut détacher des cylindres, par exemple au moyen de couteaux râcleurs.

On peut ensuite concasser le film, par exemple dans un broyeur et le transformer en flocons, par exemple en le faisant passer au travers des perforations d'un tambour. Les temps de contact entre les grains de caséine et les cylindres chauffés étant très courts, il est parfois difficile de régler exactement le taux de matières sèches du produit. C'est pourquoi, on préfère le sécher jusqu'à environ 94 - 96 % de matières sèches, puis ajuster le taux à la valeur choisie en humidifiant les flocons, par exemple par pulvérisation d'eau.

On extrude ensuite les particules de caséine sous forme de grains ou de flocons dans une boudineuse à vis thermorégulée aussi complètement que possible. La thermorégulation peut se faire par exemple par circulation d'eau dans le noyau creux de la vis, dans la chemise à double enveloppe entourant le corps et au contact de la bride de maintien de la buse. Le taux de matières sèches de la caséine entrant dans la boudineuse est critique. S'il est inférieur à 81 % en poids, la matière pâteuse formée par fusion des particules sous l'effet de la chaleur et de la pression au cours de l'extrusion est trop molle pour pouvoir être expansée convenablement. Au delà de 85 % en poids, la quantité d'eau contenue est trop faible pour permettre un gonflement suffisant, sans parler des risques de brunissement par réaction de Maillard malgré le soin qu'on a pu apporter à l'élimination du lactose lors de la préparation de la caséine. De préférence, le taux de matières sèches sera environ 83 % en poids.

La température atteinte par la matière dans la boudineuse est également un facteur essentiel du procédé selon l'invention. Elle doit être suffisante pour assurer à celle-ci la plasticité lui permettant de passer convenablement par les filières de la buse, soit 30 - 70°C dans le corps et 40 - 100°C au niveau de la buse, les valeurs inférieures de ces plages étant préférées mais 100°C est la limite supérieure au-delà de laquelle la caséine perd ses propriétés fonctionnelles et nutritionnelles et les grains présentent un aspect racorni inacceptable après leur expansion. Le temps de séjour du produit dans la boudineuse est de l'ordre de 5 à 90 s. Bien entendu, les valeurs supérieures de la température proches de 100°C ne pourront être acceptées que pour un temps de séjour court du produit se situant vers la limite inférieure de la plage.

La pression dans le corps de la boudineuse dépendra de la consistance de la pâte et de sa température, de la vitesse de rotation de la vis et des dimensions des orifices des filières de la buse. La pression de sortie au niveau de la buse peut être 9,8 à 15,7 MPa (100 à 160 kg/cm$^2$) et de préférence 14,7 à 15,7 MPa (150 à 160 kg/cm$^2$). Les orifices des filières ont avantageusement 5 à 15 mm et de préférence environ 6 mm de diamètre. Bien entendu, on peut utiliser des filières à section non circulaire conférant au produit une forme décorative selon leur profil.

Pour effectuer son expansion, on fait passer la matière pâteuse provenant des filières dans une enceinte où règne une pression sub-atmosphérique. Sous l'effet de la décompression, une partie de l'eau contenue dans cette matière, soit environ 40 - 50 %, est évaporée cependant que sa température chute brusquement, ce qui provoque son expansion et la rigidification de la structure alvéolaire produite. Le degré d'expansion dépendra du taux de matières sèches de la matière entrant dans la boudineuse et du niveau du vide régnant dans l'enceinte d'expansion. On obtient des résultats satisfaisants avec une pression dans l'enceinte de 2 à 71 kPa (0,02 à 0,7 atm.) et de préférence de 2,6 à 20 kPa (0,026 à 0,2 atm.), ce qui conduit à des produits de densité apparente 100 à 130 g/l.

On peut découper le boudin obtenu à la sortie de la buse, par exemple au moyen d'un couteau rotatif. Selon la vitesse de rotation du couteau et sa proximité des filières on peut obtenir des particules ressemblant à des bâtonnets, à des pastilles ou à des copeaux. Ces particules tombent au fond de l'enceinte d'expansion, par exemple sur une sole vibrante et peuvent être convoyées par l'intermédiaire d'un sas. En variante, on peut évacuer le boudin extrudé vers un espace où règne la pression atmosphérique et le diviser ensuite en particules, par exemple par broyage.

Le produit obtenu est non dénaturé, de couleur blanche, légèrement friable, à texture croquante et de goût neutre. Du fait de l'extrusion à basse température et de l'expansion sous vide il peut être modifié du point de vue organoleptique, par exemple salé, sucré, aromatisé ou coloré, par exemple par mélange des grains de caséine séchés avec des matières premières aromatisantes, salantes, sucrantes, colorantes avant l'extrusion sans perte de goût ni d'arôme.

En variante, les particules extrudées et expansées peuvent être imprégnées avec un support liquide, par exemple une matière grasse, un sirop, une liqueur ou un alcool contenant les matières premières en question.

Le produit modifié ou non peut être utilisé tel quel comme snack à croquer.

Il peut constituer un ingrédient entrant dans la préparation de toutes sortes de produits culinaires et de confiserie-chocolaterie. Par exemple, mélangé dans la masse ou aggloméré, il peut servir d'agent de texturation ou d'aromatisation ou encore de centre d'une barre ou d'un praliné; appliqué en surface, il peut tenir lieu d'agent d'enrobage ou de décoration.

Les exemples qui suivent illustrent l'invention. Dans ceux-ci, les pourcentages et parties sont pondéraux sauf indication contraire.

Pour réaliser l'extrusion-expansion, on a employé le matériel ci-après, le cas échéant avec les modifications indiquées dans les exemples:
- Une trémie de chargement.
- Une boudineuse de débit allant jusqu'à 20 kg/h, dont le corps est muni d'une double enveloppe thermorégulable aux températures de 12 à 150°C, équipée d'une vis de 42 mm de diamètre et de 25 cm de longueur à noyau creux également thermorégulable pouvant tourner à 9 - 66 t/min et ayant une buse d'extrusion comprenant 4 filières de 6 mm de diamètre thermorégulée au contact de la bride de maintien.
- Un couteau rotatif à deux lames pouvant tourner à 250 - 1265 t/min.
- Une enceinte d'expansion équipée d'une pompe à anneau liquide.
- Une sole vibrante.
- Un sas de sortie.

## Example 1

Préparation de la caséine

On pasteurise du lait écrémé à 72°C pendant 15 s, on le refroidit puis on l'ensemence en cuve à 32°C avec des ferments mésophiles (pH 5,3) et on l'emprésure à raison de 30 ml de présure au 1/10.000 ème pour 100 l de lait. Après coagulation, on tranche le coagulum en grains de l'ordre de 5 mm, on soutire 60 % du petit-lait, puis on lave les grains de caséine avec de l'eau à 35°C en brassant. On soutire ensuite le liquide, on met la caséine en moules et on la presse dans les moules pendant 2 h sous une pression moyenne de 2 kPa (20 g/cm²) à la température ambiante. Après un repos de 24 h en moules, on démoule les blocs et on les entrepose à 4°C. Le produit obtenu a les caractéristiques et la composition suivantes:

|  | % |
| --- | --- |
| Matières sèches | 44 - 48 |
| dont Matières grasses | <1 |
| Lactose | <1 |
| Caséine | 40 - 43 |
| Cendres | 3 - 4 |
| Eau | complément à 100 |
| pH | 5,2 - 5,4 |

On découpe les blocs en morceaux et on les broie en grains de 1 à 5 mm.

Séchage de la caséine

On envoie les grains au moyen d'une trémie sur un sécheur monocylindre chromé chauffé à la vapeur sous une pression de 500 kPa (5 bar), de surface 1 m² tournant à 9 t/min. Le rendement est de 11 - 13 kg/h/m². A l'aide d'un couteau râcleur on détache du cylindre un film de produit sec qu'on concasse dans un broyeur et qu'on transforme ensuite en flocons de 2 mm en le forçant à travers les orifices d'un tambour perforé.

Les flocons obtenus ont la composition suivante:

|  | % |
| --- | --- |
| Matières sèches | 96 |
| dont Lactose | 1 - 2 |
| Matières grasses | 1 |
| Cendres | 8 - 9 |
| dont calcium | 2 - 2,5 |
| Caséine | 81,5 - 84 |
| Eau | 4 |

On humidifie ensuite les flocons par pulvérisation d'eau dans un mélangeur jusqu'à un taux de matières sèches de 83 %.

Extrusion-expansion de la caséine

On traite les flocons humidifiés à l'aide du matériel indiqué précédemment et avec les paramètres de fonctionnement indiqués ci-après:

- Vitesse de la vis: 32 t/min
- Vitesse du couteau: 1070 t/min
- Température du corps: 30°C
- Température de la tête: 40°C
- Pression au niveau de la buse: 15,7 MPa (160 kg/cm²)
- Pression dans l'enceinte d'expansion: 4 kPa (0,04 atm)

On obtient des grains expansés légérement friables de diamètre 6 à 10 mm, de densité apparente environ 102 g/l, ayant un taux de matières sèches de 91 %, de couleur blanche, de goût parfaitement neutre et de croustillance agréable.

Par comparaison, il est possible d'extruder la caséine acide et le caséinate de sodium à 83 % de matières sèches dans les mêmes conditions de fonctionnement. Cependant, à la dégustation la caséine acide a le défaut d'un produit fortement acidulé et le caséinate de sodium a un goût prononcé de caséinate fort désagréable.

## Exemple 2

On procède comme à l'exemple 1 sauf que:

4

- lors de la préparation de la caséine, on presse la caséine dans des moules pendant 4 h sous une pression de moyenne de 4 kPa (40 g/cm²), on démoule et on sale les blocs de caséine en saumure saturée à 14°C pendant 72 h et on procède au ressuyage des blocs salés pendant 24 h à 14°C, on découpe les blocs et on les broie en grains de 5 mm,

- l'on effectue le séchage des grains de caséine au moyen d'un four à micro-ondes constitué d'une enceinte pouvant être mise sous vide munie d'une entrée et d'une sortie par sas et pourvu d'une bande transporteuse dans les conditions suivantes:

- Puissance du magnétron: 6,8 kW
- Débit à l'entrée: 18 kg/h
- Pression dans l'enceinte: 2 kPa (0,02 atm)
- Température au voisinage du produit: 68°C
- Temps de séjour: 55 min

et l'on broie les grains en les forçant à travers un tambour perforé dont les orifices ont 3 mm de diamètre.

Les grains obtenus ont 83 % de matières sèches si bien qu'il n'est pas nécessaire de les humidifier avant d'effectuer leur extrusion-expansion.

Les grains expansés obtenus sont en tout point semblables à ceux de l'exemple 1.

## Exemples 3 - 6

### Préparation d'ingrédients aromatisés salés

Par extrusion-expansion d'un mélange des grains de caséine séchée aux micro-ondes selon l'exemple 2 et de poudres aromatiques dans les conditions indiquées dans le tableau 1 ci-après, on obtient des grains de caséine aromatisés de couleur et de goût convenables qui constituent d'excellents ingrédients apportant à la fois l'arôme et la texture.

**Tableau 1**

| Ex. | Caséine % | arôme % | Conditions d'extrusion | | | |
|-----|-----------|---------|------------------------|--|--|--|
| | | | Température du corps °C | Température de la tête °C | Vitesse de la vis t/min | Vitesse du couteau t/min |
| 3 | 95,2 | poudre de cèpes (Boletus edulis): 4,8 | 50 | 70 | 9 | 1000 |
| 4 | 91,3 | arôme poisson et thon: 8,7 | 30 | 40 | 32 | 1000 |
| 5 | 90,8 | arôme poulet: 5,5 hydrolysat de protéines végétales: 3,7 | 30 | 40 | 32 | 1000 |
| 6 | 92,6 | arôme crevette: 3,7 farine de crevette: 3,7 | 30 | 40 | 32 | 1000 |

## Exemples 7 - 9

### Préparation de snacks aromatisés et colorés

Dans ces exemples, on aromatise et/ou on colore les grains de caséine extrudés-expansés préparés selon l'exemple 1 par pulvérisation d'arôme et/ou de colorant en solution dans une matière grasse liquide (chauffée le cas échéant). Le tableau 2 ci-après indique la composition des produits obtenus:

**Tableau 2**

| Ex. | Caséine | Colorant/arôme | Matière grasse<br>Huile de coco hydrogénée |
|---|---|---|---|
| 7 | 49,95 | Colorant du rocouyer<br>(jaune)<br>liposoluble: 0,1 | 49,95 |
| 8 | 49,75 | Chlorophylline<br>(verte)<br>liposoluble: 0,5 | 49,75 |
| 9 | 80 | Menthe sur huile de<br>pépins de raisin: 20 | |

**Exemples 10 - 11**

Préparation de produits panés
- Exemple 10: On broie les grains de caséine extrudés-expansés préparés selon l'exemple 2 de manière à obtenir des particules de 3,2 mm de long et 0,8 mm de diamètre. On incorpore ces particules dans une pâte à frire et on enrobe ensuite des filets de merlan surgelés avec la panure obtenue dans les proportions ci-après:

|  | % |
|---|---|
| Filet de merlan | 89 |
| Caséine | 8 |
| Pâte à frire | 3 |

On frit les filets enrobés à la poêle. Ils présentent à la dégustation une croustillance remarquable, la panure est jugée légère.
- Exemple 11: On enrobe des crevettes surgelées en utilisant les grains aromatisés préparés selon l'exemple 6 broyés en particules de 2,5 mm, avec et sans pâte à frire. On les préfrit à grande friture et on les congèle. Réchauffées au four, les crevettes ont une croustillance remarquable, les dégustateurs ayant une préférence pour l'enrobage avec pâte à frire (panure) jugé plus léger que celui sans pâte à frire (chapelure).

**Exemples 12 - 13**

Préparation de produits enrobés
On utilise les grains extrudés-expansés préparés selon l'exemple 1 comme élément décoratif:
- Exemple 12: Après préfriture, on enrobe des boulettes d'une purée de pommes de terre avec 5 % (basé sur le poids total) de grains de caséine et on les congèle. Les grains blancs procurent un aspect contrasté plaisant aux boulettes de pommes de terre dorées.
- Exemple 13: On place les grains à la surface d'une composition grasse de couleur jaune pâle à base de chololat blanc vanillé sous forme liquide, destinée à servir de couverture pour bâtonnets glacés. Du fait de leur faible densité, les grains restent à la surface. Lorsqu'on plonge les bâtonnets glacés dans la composition d'enrobage ainsi préparée, les grains blancs se répartissent uniformément sur la surface du bâtonnet et lui confèrent un aspect plaisant.

**Exemples 14 - 15**

Utilisation comme agent de texturation
Dans cette application, on broie les grains préparés selon l'exemple 1. Les particules obtenues sont destinées à être incorporées dans la masse de préparations culinaires de manière à leur conférer une texture filante en remplacement du fromage. Par rapport au fromage, elles présentent l'avantage de neutralité du goût.
- Exemple 14: On prépare un soufflé aux asperges à l'aide des ingrédients indiqués dans les proportions données ci-après:

6

|                              | %    |
| ---------------------------- | ---- |
| Caséine                      | 16,1 |
| Asperges déshydratées        | 20   |
| Lait écrémé                  | 19,3 |
| Pommes de terre en flocons   | 16,1 |
| Levure chimique              | 9    |
| Oeuf entier déshydraté       | 9,7  |
| Amidon modifié               | 6,4  |
| Sel                          | 1,6  |
| Epices sur sel               | 0,5  |
| Matières grasses végétales   | 1,3  |

Après cuisson, le soufflé a une bonne tenue, une texture alvéolée et un goût franc d'asperge.

- Exemple 15: On incorpore les particules de caséine et un arôme de fromage dans une masse de purée de pommes de terre avant le formage en boulettes dans les proportions suivantes:

|                                  | %    |
| -------------------------------- | ---- |
| Masse de purée de pommes de terre | 90,6 |
| Caséine                          | 9,1  |
| Arôme naturel de fromage         | 0,3  |

Après congélation puis friture, les boulettes laissent apparaître une texture filante lorsqu'on les ouvre à chaud.

## Exemples 16 - 18

Préparation de barres

On utilise les grains de caséine extrudés-expansés préparés selon l'exemple 1 comme base interne pour préparer par agglomération des barres sucrées et chocolatées.

- Exemple 16: On coule du chocolat chaud sur les grains, puis on place ces grains enrobés de chocolat dans des moules parallélépipèdiques, puis on refroidit les moules et on démoule les articles. Ceux-ci reçoivent ensuite un enrobage de chocolat.

- Exemple 17: On mélange les ingrédients indiqués dans les proportions données ci-après:

|                         | %  |
| ----------------------- | -- |
| Blé soufflé au miel     | 46 |
| Caséine                 | 36 |
| Huile de coco hydrogénée | 18 |

On remplit des moules parallélépipèdiques avec le mélange et on compacte celui-ci dans les moules sous une pression de 98kPa (11 kg/cm$^2$) sous forme de tablettes de dimensions 8 cm x 4 cm x 1 cm.

- Exemple 18: On procède comme à l'exemple 17 à partir du mélange des ingrédients indiqués dans les proportions données ci-après:

|                                              | %    |
| -------------------------------------------- | ---- |
| Birchermuesli (mélange de flocons de céréales et de morceaux de fruits secs) | 70,8 |
| Caséine                                      | 15,1 |
| Huile de coco hydrogénée                     | 9,1  |
| Sucre glace                                  | 5    |

Les tablettes obtenues sont équilibrées du point de vue de leurs proportions en protéines, lipides et hydrates de carbone.

7

**Exemple 19**

Préparation d'un produit du genre des chips

On prépare un produit très expansé et très croustillant en partant de flocons de caséine séchés puis humidifiés à 83 % de matières sèches comme indiqué dans l'exemple 1 qu'on extrude-expanse dans les conditions indiquées dans l'exemple 1 mis à part les différences ci-après:

- Une filière à 1 trou de 15 mm de diamètre.
- Un couteau à 1 lame tournant à 1000 t/min.
- Pression dans l'enceinte d'expansion: 2,6 kPa (0,026 atm)

On obtient des copeaux translucides légèrement expansés ayant un taux de matières sèches de 88,5 à 89 %.

On jette ensuite les copeaux dans l'huile de friture à 190°C où ils s'expansent instantanément. Les chips obtenues sont très expansées et croustillantes et ont la composition suivante:

|  | % |
| --- | --- |
| Matières grasses | 55 |
| Caséine | 39,1 |
| Cendres | 3,4 |
| Eau | 2,5 |

Ces chips peuvent naturellement être aromatisées, épicées, salées ou colorées.

**Revendications**

1. Procédé de préparation d'un produit sec expansé à base de caséine, caractérisé par le fait qu'on prépare une caséine de caractére présure de pH 5,1 à 5,7, qu'on la sèche à une température du produit ne dépassant pas environ 70°C jusqu'à un taux de matières sèches de 81 à 85 % en poids, qu'on l'extrude dans une boudineuse à une température de 30 à 100°C sous une pression suffisante pour la rendre plastique, le temps de séjour du produit dans la boudineuse étant 5 à 90 s, qu'on provoque son expansion en la soumettant à une pression sub-atmosphérique et qu'on divise le boudin obtenu.

2. Procédé selon la revendication 1, caractérisé par le fait qu'on prépare la caséine par coagulation du lait écrémé par la présure après avoir règlé son pH à 5,2 - 5,4 par acidification biologique au moyen de ferments mésophiles.

3. Procédé selon la revendication 2, caractérisé par le fait qu'après coagulation, on tranche le caillé, on soutire le petit-lait, on lave le caillé tranché et on le presse sous forme de blocs de manière que la caséine ait, en poids, un taux de matières sèches de 44 à 48 % un taux maximum de lactose de 1 % et un taux maximum de matières grasses de 1 % et on divise les blocs en grains de 1 mm à 2 cm.

4. Procédé selon la revendication 3, caractérisé par le fait qu'après pressage du caillé, on sale les blocs de caséine et on procède au ressuyage des blocs salés avant de les diviser en grains.

5. Procédé selon la revendication 1, caractérisé par le fait qu'on sèche la caséine à une température du produit ne dépassant pas environ 70°C sous forme d'un film à l'aide d'un sécheur à cylindres jusqu'à environ 94 - 96 % en poids de matières sèches, et qu'on l'humidifie ensuite de manière qu'elle ait un taux de matières sèches d'environ 83 % en poids.

6. Procédé selon la revendication 1, caractérisé par le fait qu'on sèche la caséine à une température du produit ne dépassant pas environ 70°C à l'aide d'un four à microondes sous vide.

7. Procédé selon la revendication 1, caractérisé par le fait qu'on extrude la caséine séchée sous forme d'un boudin dans une boudineuse comprenant un corps et une buse munie de filières à une température de 30 à 70°C au niveau du corps de la boudineuse et de 40 à 100°C au niveau de la buse, sous une pression de 14,7 à 15,7 MPa au niveau de la buse, par des filières dont les orifices ont un diamètre ce 5 à 15 mm, qu'on effectue l'expansion du boudin dans une enceinte où règne une pression de 2,6 à 20 kPa et qu'on découpe le boudin au moyen d'un couteau rotatif au voisinage de la buse.

8. Procédé selon la revendication 1, caractérisé par le fait qu'on modifie la caséine du point de vue organoleptique par mélange des grains de caséine séchés avec des matières premières aromatisantes, salantes, sucrantes ou colorantes avant l'extrusion ou par imprégnation des particules extrudées et expansées avec un support liquide contenant les matières premières en question.

9. Produit sec expansé susceptible d'être obtenu par la mise en oeuvre du procédé selon l'une des revendications 1 à 8.

10. Procédé de préparation d'un aliment, notamment d'un produit culinaire ou de confiserie-chocolaterie, à l'aide d'un produit sec expansé selon la revendication 9, caractérisé par le fait qu'on l'incorpore dans la masse ou qu'on l'applique à la surface dudit aliment.

11. Aliment obtenu par la mise en oeuvre du procédé selon la revendication 10.

## EP 0 202 484 B1

**Patentansprüche**

1. Verfahren zur Herstellung eines expandierten Trockenprodukts auf der Basis von Casein, dadurch gekennzeichnet, daß man ein Casein vom Labtyp bei einem pH von 5,1 bis 5,7 herstellt, daß man dieses bei einer etwa 70°C nicht überschreitenden Produkttemperatur bis zu einem Trockenmassegehalt von 81 bis 85 Gew.-% trocknet, daß man es in einem Extruder bei einer Temperatur von 30 bis 100°C unter einem Druck extrudiert, der ausreicht, es zu plastifizieren, wobei die Verweilzeit des Produkts in dem Extruder 5 bis 90 s beträgt, daß man seine Expansion bewirkt, indem man es einem unteratmosphärischen Druck aussetzt, und daß man den erhaltenen Strang zerteilt.

2. Verfahren nach Anspruch 1, dadurch gekennzeichnet, daß man das Gase in durch Coagulation entrahmter Milch mit Lab herstellt, nachdem ihr pH durch biologische Ansäuerung mit Hilfe mesophiler Fermente auf einen pH von 5,2 bis 5,4 eingestellt wurde.

3. Verfahren nach Anspruch 2, dadurch gekennzeichnet, daß man nach der Coagulation die Dickmilch schneidet, die Molke abzieht, die geschnittene Dickmilch wäscht und unter Bildung von Blöcken auf eine solche Weise preßt, daß das Casein, bezogen auf das Gewicht, einen Trockenmassegehalt von 44 bis 48 %, einen maximalen Laktosegehalt von 1 % und einen Maximalgehalt an Fettstoffen von 1 % aufweist, und daß man die Blöcke in Körner von 1 mm bis 2 cm zerteilt.

4. Verfahren nach Anspruch 3, dadurch gekennzeichnet, daß man nach dem Pressen der Dickmilch die Caseinblöcke einsalzt und eine Trocknung der eingesalzenen Blöcke vornimmt, bevor man sie in Körner zerteilt.

5. Verfahren nach Anspruch 1, dadurch gekennzeichnet, daß man das Casein bei einer Produkttemperatur, die etwa 70°C nicht überschreitet, unter Ausbildung eines Films mit Hilfe einer Trockentrommel bis auf einen Trockenmassegehalt von etwa 94 bis 96 % trocknet, und daß man danach auf eine solche Weise anfeuchtet, daß ein Trockenmassegehalt von etwa 83 Gew.-% erhalten wird.

6. Verfahren nach Anspruch 1, dadurch gekennzeichnet, daß man das Casein ohne Überschreitung einer Produkttemperatur von etwa 70°C mit Hilfe eines Mikrowellenofens unter Vakuum trocknet.

7. Verfahren nach Anspruch 1, dadurch gekennzeichnet, daß man das getrocknete Casein unter Ausbildung eines Strangs in einem Extruder mit einem Gehäuse und einer mit einem Mundstück versehenen Düse bei einer Temperatur von 30 bis 70°C im Bereich des Gehäuses des Extruders und von 40 bis 100°C auf der Höhe der Düse unter einem Druck von 14,7 bis 15,7 MPa auf der Höhe der Düse extrudiert, wobei die Öffnungen des Mundstücks einen Durchmesser von 5 bis 15 mm aufweisen, und daß man die Expansion des Strangs in einem Raum bewirkt, wo ein Druck von 2,6 bis 20 kPa herrscht, und daß man den Strang mit Hilfe eines rotierenden Messers in kurzer Entfernung von der Düse zerschneidet.

8. Verfahren nach Anspruch 1, dadurch gekennzeichnet, daß man das Casein unter organoleptischen Gesichtspunkten durch Mischen der getrockneten Caseinkörner mit aromatisierten, gesalzten, gezuckerten oder gefärbten Rohstoffen vor der Extrusion oder durch Imprägnieren der extrudierten und expandierten Teilchen mit einem flüssigen Träger, der die fraglichen Rohstoffe enthält, modifiziert.

9. Expandiertes Trockenprodukt, erhältlich bei der Durchführung des Verfahrens nach einem der Ansprüche 1 bis 8.

10. Verfahren zur Herstellung eines Nahrungsmittels, insbesondere eines Küchenprodukts oder eines Schokoladen-Süßwarenprodukts, mit Hilfe eines expandierten Trockenprodukts nach Anspruch 9, dadurch gekennzeichnet, daß man dieses in die Masse einarbeitet oder daß man es auf die Oberfläche des Nahrungsmittels aufbringt.

11. Nahrungsmittel, das durch die Durchführung des Verfahrens nach Anspruch 10 erhalten wurde.

**Claims**

1. A process for the preparation of a dry casein-based puffed product, characterized in that a rennet-type casein having a pH of 5.1 to 5.7 is prepared and then dried at a temperature of the product not exceeding approximately 70°C to a dry matter content of 81 to 85 % by weight, in that the product thus dried is extruded in an extruder at a temperature of 30 to 100°C under a pressure sufficient to render it plastic, the residence time of the product in the extruder being 5 to 90 s, in that it is puffed by exposure to sub-atmospheric pressure and in that the extrudate is size-reduced.

2. A process as claimed in Claim 1, characterized in that the casein is prepared by coagulation of skimmed milk with rennet after adjustment of its pH to 5.2 - 5.4 by biological acidification with mesophilic ferments.

3. A process as claimed in Claim 2, characterized in that after coagulation the curd is cut, the cut curd is washed and then compressed into blocks so that the casein has a dry matter content of from 44 to 48 % by weight, a maximum lactose content of 1 % and a maximum fats content of 1 % and the blocks are size-reduced to grains from 1 mm to 2 cm in size.

4. A process as claimed in Claim 3, characterized in that, after compression of the curd, the casein blocks are salted and then dried before size-reduction to grains.

5. A process as claimed in Claim 1, characterized in that the casein is dried at a product temperature not exceeding approximately 70°C in the form of a film using a cylinder dryer to a dry matter content of approximately 94 - 96 % by weight and in that it is then moistened so that it has a dry matter content of approximately 83 % by weight.

6. A process as claimed in Claim 1, characterized in that the casein is dried at a product temperature not exceeding approximately 70°C in a vacuum microwave oven.

7. A process as claimed in Claim 1, characterized in that the dried casein is extruded in the form of a strand in an extruder comprising a barrel and a multiple-bore nozzle at a temperature of from 30 to 70°C in the extruder barrel and from 40 to 100°C in the nozzle under a pressure in the nozzle of from 14.7 to 15.7 MPa through bores having an orifice diameter of from 5 to 15 mm, in that the strand is puffed in an enclosure where a pressure of from 2.6 to 20 kPa prevails and in that the strand is cut up by means of a rotary cutter in the vicinity of the nozzle.

8. A process as claimed in Claim 1, characterized in that the casein is organoleptically modified by mixing the dried casein grains with flavouring, seasoning, sweetening or colouring starting materials before extrusion or by impregnation of the extruded and puffed articles with a liquid support containing the starting materials in question.

9. The dry puffed product obtainable by the process claimed in any of Claims 1 to 8.

10. A process for the preparation of a food, more especially a culinary product or a confectionery/chocolate product, using the dry puffed product claimed in Claim 9, characterized in that it is incorporated in the body or applied to the surface of said food.

11. The food obtained by the process claimed in Claim 10.